# FASCICULE DE BREVET EUROPEEN

(11) **EP 0 322 295 B1**
(45) Date de publication et mention de la délivrance du brevet: **25.08.1993**
(21) Numéro de dépôt: 88403231.9
(22) Date de dépôt: 19.12.1988
(51) Int. Cl.: C03C 14/00

(54) **Procédé de fabrication d'un matériau composite à matrice vitro-céramique ou céramique par voie sol-gel et matériau composite ainsi obtenu**
Verfahren zur Herstellung eines Verbundstoffes mit einer Glaskeramik- oder Keramikmatrix durch Sol-Gel-Verfahren und so erhaltener Verbundwerkstoff
Process for making a composite material with a glass-ceramic or ceramic matrix by the sol-gel process, and composite material obtained

(30) Priorité: 23.12.1987 FR 8718023
(43) Date de publication de la demande: 28.06.1989
(73) Titulaire: AEROSPATIALE Société Nationale Industrielle, 75781 Paris Cédex 16 (FR)
(72) Inventeur: Lespade, Pierre, F-33700 Merignac (FR); Guette, Alain, F-33110 Le Bouscat (FR); Menessier, Erik, F-33400 Talence (FR); Naslain, Roger, F-33600 Pessac (FR); Pailler, René, F-33610 Cestas (FR)
(74) Mandataire: Lepeudry-Gautherat, Thérèse

(56) Documents cités:
- EP-A- 290 146
- EP-A- 0 125 005
- JOURNAL OF NON-GRYSTALLINE SOLIDS, vol. 100, nos. 1-3, mars 1988, pages 409-412, Elsevier Science Publishers B.V. (North-Holland Physics Publishing Division), Amsterdam, NL; A. OSAKA et al.: "Sodium borosilicate glasses prepared by the sol-gel process"
- JOURNAL OF NON-CRYSTALLINE SOLIDS, vol. 100, nos. 1-3, mars 1988, pages 453-460, Elsevier Science Publishers B.V. (North-Holland Physics Publishing Division), Amsterdam, NL; M.A. VILLEGAS et al.: "Hydrolytic resistance of Na2O-B2O3-SiO2 gels prepared by sol-gel process"

## Description

La présente invention concerne, de manière générale, la fabrication de matériaux composites, et, plus particulièrement celle de matériaux composites à renforts fibreux et à matrice vitro-céramique ou céramique obtenue par voie sol-gel.

Le terme vitro-céramique est utilisé ici car, lors de l'étape de densification du matériau, il est plus avantageux que la matrice se trouve sous forme vitreuse, c'est-à-dire ayant un comportement rhéologique permettant sa mise en forme, la phase finale de l'élaboration du matériau permettant de maîtriser le degré de céramisation souhaité.

Les matériaux composites du type vitro-céramique-céramique ou céramique-céramique sont généralement utilisés dans les domaines aéronautique et spatial pour des applications nécessitant une bonne tenue à moyenne ou haute température, c'est-à-dire de l'ordre de 600 à 2500°C. Il s'agit par exemple des freins en carbone-carbone, des cols de tuyère, des matériaux de protection thermique.

Les matériaux composites céramique-céramique peuvent également être utilisés pour réaliser certaines pièces des moteurs d'automobile telles que rotor de turbo-compresseur, échangeur thermique, piston, arbre de transmission etc...

De nombreux auteurs ont cherché à préparer de tels matériaux.

Ainsi un article de S.R. LEVITT ("High strength graphite-fiber/lithium alumino-silicate" J. Materials Science , 8 (1973). 793) fait état de composites à matrice céramique de composition Li₂OAl₂O₃nSiO₂ où n = 3, 4, 8 et à renfort unidirectionnel.

De même un article de K.M. PREWO et J.J. BRENNAN ("Silicon carbide fiber reinforced glass-ceramic matrix composites exhibiting high strength and thoughness" J. Materials Science 17 (1982) 2371)fait état de composites à matrice céramique de composition Li₂OAl₃O₃4SiO₂ et à renfort de carbure de silicium dont l'élaboration nécessite des températures très élevées (1300-1600°C) sous une pression de 7MPa.

Dans le brevet français n° 2 521 982, l'auteur décrit l'élaboration d'un matériau composite céramique-céramique du type alumine-alumine en utilisant des fibres d'alumine et un sol d'alumine. Les matériaux du brevet français N° 2 521 982 possèdent une porosité résiduelle importante.

Toutes ces approches pour élaborer des matériaux composites céramiques utilisent deux techniques.

Une technique dans laquelle la préforme fibreuse est imprégnée à l'aide d'une barbotine (phases solides dispersées dans un liquide), cette préforme ainsi imprégnée étant ensuite densifiée par un traitement thermique sous pression. Cette technique nécessite des températures de compression supérieures à 1200°C.

Une technique dans laquelle la préforme fibreuse est imprégnée par voie sol-gel : le sol consiste en une solution colloïdale et le gel est formé d'agglomérats de particules élémentaires dont la taille est de l'ordre de 100 Å et qui sont disposés de manière plus ou moins compacte. Cette imprégnation peut, dans certains cas, être suivie par un traitement thermique sous pression. Ce traitement thermique, dans le cas où l'on n'applique pas de pression, ne permet pas d'obtenir des matériaux bien densifiés. Il apparaît très souvent une porosité résiduelle d'au moins 20 %. Dans le cas où l'imprégnation est suivie d'un traitement thermique sous pression, les températures mises en jeu pour obtenir un matériau céramique dense sont supérieures à 1100°C.

La Demanderesse a pu mettre au point un nouveau procédé de fabrication de matériaux composites à matrice céramique par voie sol-gel qui permet :
- de maintenir une phase vitreuse durant l'étape de densification par compression à chaud à température beaucoup plus basse que celles qui étaient utilisées jusqu'ici, et
- d'obtenir une matrice céramique dense (taux de porosité résiduelle Vₚ ≦ 10 % voire 5 %) dans laquelle la céramisation ne nécessite pas l'ajout supplémentaire d'agent nucléant tel que par exemple TiO₂, ZrO₂ ou P₂O₅.

L'élaboration des matériaux composites préparés selon l'invention à partir de fibres de carbone, de carbure de silicium, d'alumine, d'alumine-silice et de sol combine la technique d'imprégnation par voie sol-gel et la technique de densification par un traitement thermique sous pression à une température inférieure à 1100°C.

Il est connu de l'homme du métier que les céramiques obtenues par la voie sol-gel ont tendance à cristalliser à basse température, propriété préjudiciable lorsqu'il s'agit de densifier une préforme fibreuse dans la mesure où une cristallisation prématurée interdit d'obtenir un matériau à faible porosité résiduelle. La caractéristique de l'invention est d'avoir établi que l'introduction d'un agent retardateur de cristallisation dans le sol permet de conserver la phase vitreuse durant l'étape de densification du matériau et d'obtenir un matériau à faible porosité résiduelle sans utilisation d'agent nucléant.

L'invention a donc pour objet un procédé de fabrication par voie sol-gel et compression à chaud d'un matériau composite constitué d'un renfort en fibres céramiques et d'une matrice vitro-céramique ou céramique à base de silice, Al₂O₃ et LiO₂ ayant les caractéristiques de la revendication 1.

Le procédé de l'invention permet d'obtenir des matériaux de faible porosité résiduelle et dont la tenue thermomécanique est conservée pour des températures supérieures à 600°C.

Ce procédé comporte les étapes suivantes :
a) imprégnation d'un renfort fibreux par un sol préparé à partir d'une suspension aqueuse de silice, d'une solution de sels métalliques et d'une solution contenant un agent retardateur de cristallisation,
b) séchage du renfort fibreux ainsi imprégné,
c) répétition des étapes imprégnation-séchage jusqu'à obtention d'un préimprégné ayant la fraction volumique de fibres recherchée,
d) pyrolyse du préimprégné pendant un temps suffisamment long pour évacuer les gaz formés par réaction chimique,
e) compression à chaud et refroidissement hors pression jusqu'à la température ambiante.

Un post-traitement thermique, avec ou sans pression, dit de céramisation peut être effectué à des températures supérieures à la température de compression à chaud. Il permet d'obtenir un matériau ayant une meilleure tenue thermomécanique en transformant plus ou moins complètement la matrice vitreuse en céramique.

Le sol est préparé à partir d'une suspension aqueuse de silice contenant de préférence un taux élevé de silice afin de limiter le nombre d'imprégnations, et plus particulièrement de sols commerciaux à 40 % en poids environ de silice.

Les sels métalliques contenus dans le sol sont choisis parmi les sels tels que les sels de lithium et d'aluminium et plus particulièrement leurs nitrates.

L'agent retardateur de cristallisation utilisé de préférence est l'anhydride borique ajouté au sol sous forme d'un précurseur.

Cet oxyde, qui possède un bas point de fusion (470°C), s'élimine pour une bonne part lors de l'étape de compression à chaud en se combinant avec l'oxyde de lithium et l'eau ou/et en s'intégrant dans le réseau cristallin pour la partie restante, le renfort fibreux servant de chemin privilégié pour cette élimination. Ainsi l'oxyde de bore facilite la densification du matériau composite sans en abaisser notablement pour autant son caractère réfractaire.

La teneur en anhydride borique du sol est comprise de préférence entre 10 et 30 % en poids et plus particulièrement est de 17 % en poids environ (par rapport à la silice). Le précurseur d'anhydride borique est choisi parmi l'acide borique et les borates solubles, notamment les borates d'ammonium et plus particulièrement le tétraborate d'ammonium.

En tout état de cause, la composition du sol est fonction, d'une part de la composition de la ou des phases cristallisées souhaitées, et, d'autre part, de la quantité d'anhydride borique à rajouter pour que la phase vitreuse puisse apparaître durant l'étape de densification, la concentration globale du sol étant limitée par la solubilité des différents produits.

Le pH du sol est acide, par exemple compris entre 1 et 2, ce qui favorise le mouillage du renfort fibreux. Si le pH est supérieur à 3,5, le sol devient instable et gélifie. La concentration globale du sol en équivalent oxyde influe sur le pourcentage volumique de fibres du composite. Cette concentration peut être augmentée par élévation de la température du sol.

Par ailleurs, il peut être intéressant d'incorporer au sol des charges sous forme de whiskers ou de particules réactives ou non avec la matrice.

Les fibres constituant le renfort fibreux sont choisies parmi les fibres céramiques et notamment les fibres de carbone, carbure de silicium, alumine et alumine-silice. La fraction volumique de fibres dans le composite est comprise entre 20 et 70%.

Les fibres utilisées peuvent être unidirectionnelles et continues ou sous forme de tissus, de mats non tissés ou encore de préformes multidirectionnelles.

Le renfort fibreux, sous la forme de fibres, tissus ou préformes, est désensimé avant l'imprégnation. Il peut recevoir avant l'étape d'imprégnation par le sol un traitement de surface ou être revêtu d'un dépôt de nature appropriée si l'on désire affaiblir la liaison fibre-matrice pour augmenter la ténacité du composite et/ou protéger la fibre contre l'agressivité de la matrice. On peut ainsi les recouvrir d'un dépôt constitué d'un produit à caractère lamellaire ou feuilleté, tel que du pyrocarbone, ainsi qu'il est connu de l'homme du métier.

L'imprégnation peut être réalisée en une seule fois, par gélification in situ du sol, induite par augmentation de la température ou modification du pH.

Les cycles imprégnation-séchage permettent de contrôler le taux de fibres. Le produit obtenu à la fin de ces cycles est appelé préimprégné : il conserve suffisamment de souplesse pour être mis en forme.

Par pyrolyse de ce préimprégné on élimine les produits volatils libérés par les réactions de décomposition des sels métalliques en oxydes. Cette étape est réalisée à une température allant de 200 à 600°C, pendant une durée suffisante pour évacuer les gaz formés par réaction chimique. Elle peut éventuellement être précédée d'une étape de déshydratation, mise en oeuvre par exemple à une température de l'ordre de 100°C.

Le préimprégné pyrolysé est ensuite densifié et céramisé par compression à chaud. Cette étape a une durée variable selon le type et les dimensions du matériau, typiquement de 1 h à 3 h. Elle peut s'effectuer sous vide, sous atmosphère contrôlée ou à l'air, suivant la nature du renfort fibreux. La température à laquelle cette étape est effectuée est comprise entre 600 et 900°C, sous une pression inférieure à 50 MPa. Par ailleurs il peut être avantageux de prévoir deux paliers de température.

Le composite ainsi obtenu est alors refroidi hors pression.

Un post-traitement dit de céramisation peut être effectué à des températures supérieures à la température de compression à chaud et permet d'obtenir un matériau ayant une meilleure tenue thermomécanique en transformant plus ou moins complètement la partie vitreuse résiduelle de la matrice en céramique.

Ainsi, selon une variante particulière, le préimprégné pyrolysé peut être soumis au traitement suivant : chauffage sans pression jusqu'à la température de transition vitreuse de la matrice issue de la pyrolyse du préimprégné, mise sous pression à la température de transition vitreuse de la matrice, élévation sous pression de la température jusqu'à une valeur se situant dans l' intervalle 800-1000°C afin de parfaire l'état de densification, d'éliminer partiellement l'agent retardateur et de donner à la matrice du composite le dégré de céramisation rechérché.

L'invention sera maintenant illustrée à l'aide de quelques exemples sans pour autant que ceux-ci en limitent la portée.

### EXEMPLE 1 :

Un sol contenant 90,13 g de suspension aqueuse de silice (Ludox AS40 de la Société DU PONT DE NEMOURS), 20,68 g de nitrate de lithium, 112,54 g de nitrate d'aluminium et 13,17 g de tétraborate d'ammonium et 240 cm³ d'eau est préparée et son pH est ajusté à la valeur 1.

Dix tissus de fibres de carbone haut module (nuance M40 de la Société TORAY) désensimés à 550°C durant 10 mn sont imprégnés par le sol puis séchés à température ambiante. Ce cycle imprégnation-séchage est reproduit sept fois. Le préimprégné est ensuite déshydraté à 100°C durant 1 h. L'étape de compression à chaud s'effectue avec un palier à 900°C durant 30 mn. Une pression uniaxiale de 12,5 MPa est appliquée progressivement à partir de 500°C jusqu'à la fin de la compression à chaud. Lors du refroidissement la pression est relâchée. La fraction volumique de fibres est de 63 %, le taux de porosité résiduelle de 5 %, et la densité de 1,76 g/cm³. La phase cristalline apparue lors de la céramisation est la spodumène β. L'analyse montre, par ailleurs, que la matrice ne contient pratiquement plus de B₂O₃.

Les caractéristiques mécaniques de ce matériau sont,pour un essai de flexion 3 points (avec un élancement de 22):
Module d'élasticité E = 170 GPa
Contrainte à rupture σ_{R} = 235 MPa.

Le coefficient de dilatation thermique du matériau est de 18·10⁻⁷°C⁻¹ pour des températures supérieures à 300°C. La température maximale d'utilisation de ce matériau est de 830°C. Dans le cas où l'on traite le matériau sous une atmosphère d'ammoniac, durant 2 h à une température de 800°C, on observe que la température maximale d'utilisation est portée à 950°C.

### EXEMPLE 2 :

Un matériau composite a été élaboré à partir du sol préparé comme indiqué à l'exemple 1 et de fibres de carbure de silicium (fibres commercialisées par la Société NIPPON-CARBON sous la marque NICALON). La procédure d'imprégnation-séchage est la même que dans l'exemple 1. Le préimprégné ainsi préparé a été ensuite pyrolysé à 600°C durant 1/2 heure. L'étape de compression à chaud, selon la même technique décrite dans l'exemple 1, a été effectuée avec deux paliers en température : un palier à 625°C durant 30 minutes, un palier à 900°C durant 30 minutes. Une pression de 25 MPa a été appliquée à partir de 600°C et jusqu'à la fin de l'élaboration du composite.

La fraction volumique de fibres dans le matériau est de 50 %, le taux de porosité de 2 % et la densité est de 2,47 g/cm³.

Les essais mécaniques de flexion trois points ont donné (élancement 43) :
E = 120 GPa
σ_{R} = 250 MPa.

La phase cristalline développée au sein de la matrice est la spodumène β.

### EXEMPLE 3 :

Un matériau composite a été élaboré à partir de fibres d'alumine-silice (fibres commercialisées par la Société SUMITOMO sous la marque SUMITOMO). Dans une boîte de PETRI, on dispose les fibres unidirectionnellement. Le sol, dont la composition est décrite dans l'exemple 1, est ensuite versé sur ces fibres. La gélification du sol apparaît après 48 heures à température ambiante. Le produit obtenu est ensuite déshydraté à 100°C durant 24 heures. On obtient un préimprégné. Ce préimprégné est alors pyrolysé, d'abord à une température de 220°C durant 1 heure puis à une température de 600°C durant 1/2 heure. Le cycle de compression à chaud est analogue à celui décrit dans l'exemple 2. La phase cristalline développée dans la matrice est la spodumène β.

La fraction volumique de fibres dans le matériau est de 55 %, le taux de porosité de 5 % et la densité de 2,70 g/cm³.

Les propriétés mécaniques obtenues en flexion trois points sont (élancement de 60) :
E = 155 GPa
σ_{R} = 100 MPa.

### EXEMPLE 4 :

Un matériau composite a été obtenu comme dans l'exemple 2, sauf que l'élaboration du matériau à été arrêtée après le palier à 625°C de l'étape de compression à chaud.

La fraction volumique de fibres de matériau est de 55 %, la porosité résiduelle est de 5 % et la densité est de 2,25 g/cm³.

La matrice se trouve sous une forme vitreuse puisque l'étape de céramisation n'a pas eu lieu.

Les propriétés mécaniques obtenues lors d'un essai de flexion 3 points sont (élancement de 50) :
E = 100 GPa
σ_{R} = 80 MPa.

### EXEMPLE 5 :

Un matériau composite a été élaboré à partir du sol préparé comme indiqué dans l'exemple 1 et de fibres de carbure de silicium (fibres commercialisées par la Société NIPPON-CARBON sous la marque NICALON) revêtues d'une couche de 0,3 µ d'épaisseur de pyrocarbone obtenue par dépôt chimique en phase vapeur. La procédure d'imprégnation-séchage est la même que dans l'exemple 2. L'étape de pyrolyse du préimprégné a eu lieu à une température de 550°C durant 30 minutes sous une atmosphère d'azote.

L'étape de compression à chaud, selon la même technique décrite dans l'exemple 1 a été effectuée avec un palier en température à 900°C durant 30 minutes. Une pression de 25 MPa a été appliquée à partir de 800°C et jusqu'à la fin de l'élaboration du composite.

La fraction volumique de fibres dans le matériau est de 53 %, sa porosité résiduelle inférieure à 1 % et sa densité est de 2,44 g/cm³. La phase cristalline développée au sein du matériau est la spodumène β.

Les essais mécaniques de flexion 3 points ont donné (élancement de 50):
E = 135 GPa
σ_{R} = 500 MPa.

D'autres essais identiques à celui de l'exemple 5 ont été réalisés sur d'autres échantillons avec des épaisseurs d'interphase de pyrocarbone différentes inférieures à environ 0,4 micron.

Les résultats des essais précédents ont montré qu'il existe une corrélation entre les constantes élastiques qui diminuent en fonction de l'épaisseur de pyrocarbone à l'intérieur de la plage ci-dessus. Il a été également observé une augmentation des résistances à la rupture en flexion trois points en fonction de l'épaisseur de pyrocarbone dans la même plage.

### EXEMPLE COMPARATIF :

Un sol contenant 48,06 g de suspension aqueuse de silice (Ludox AS40 de la Société DU PONT DE NEMOURS), 5,51 g de nitrate de lithium, 30,10 g de nitrate d'aluminium et 300 cm³ d'eau est préparé, et son pH est ajusté à 2.

Des fibres d'alumine-silice (fibres commercialisées par la Société SUMITOMO sous la marque SUMITOMO) sont imprégnées par le sol, puis séchées 24 heures à température ambiante. Ce cycle d'imprégnation-séchage est reproduit trois fois. L'étape de compression à chaud s'effectue avec deux papiers en température. Un papier à 620°C durant 2 heures et un papier à 850°C durant 1/2 heure. La pression de 20 MPa est appliquée à partir de 800°C.

Le matériau obtenu n'a aucune tenue mécanique. Il n'y a pas eu de densification.

## Revendications

1. Procédé de fabrication par voie sol-gel et compression à chaud d'un matériau composite constitué d'un renfort en fibres céramiques, notamment en fibres de carbone, de carbure de silicium, d'alumine ou d'alumine-silice et d'une matrice vitro-céramique ou céramique à base de SiO₂, Al₂O₃ et Li₂O, caractérisé en ce qu'il comprend l'imprégnation du renfort en fibres céramiques par un sol préparé à partir d'une suspension aqueuse de silice et d'une solution de sels métalliques et la compression à chaud du préimprégné obtenu et en ce que ledit sol renferme un agent retardateur de cristallisation ou un précurseur d'un tel agent.

2. Procédé selon la revendication 1, caractérisé en ce qu'il comprend les étapes suivantes :
a) imprégnation d'un renfort fibreux par un sol préparé à partir d'une suspension aqueuse de silice, d'une solution de sels métalliques et d'une solution contenant un agent retardateur de cristallisation ou un précurseur d'un tel agent,
b) séchage du renfort fibreux ainsi imprégné,
c) répétition des étapes imprégnation-séchage jusqu'à obtention d'un préimprégné ayant la fraction volumique de fibres recherchée,
d) pyrolyse du préimprégné pendant un temps suffisamment long pour évacuer les gaz formés par réaction chimique,
e) compression à chaud et refroidissement hors pression jusqu'à la température ambiante.

3. Procédé selon la revendication 1 ou 2, caractérisé en ce que l'agent retardateur de cristallisation est l'anhydride borique.

4. Procédé selon la revendication 3, caractérisé en ce que l'anhydride borique est ajouté au sol sous forme d'un précurseur consistant en l'acide borique ou un borate, de préférence le tétraborate d'ammonium.

5. Procédé selon la revendication 3 ou 4, caractérisé en ce que la teneur en anhydride borique du sol est comprise entre 10 et 30 % en poids par rapport à la silice.

6. Procédé selon l'une quelconque des revendications 2 à 5, caractérisé en ce que les sels métalliques sont choisis parmi les sels d'aluminium et de lithium, de préférence leurs nitrates.

7. Procédé selon l'une quelconque des revendications 1 à 6, caractérisé en ce que la concentration globale du sol en équivalent oxyde est augmentée par élévation de la température du sol.

8. Procédé selon l'une quelconque des revendications 1 à 7, caractérisé en ce que des charges sont incorporées dans le sol sous forme de whiskers ou de particules réactives ou non avec la matrice.

9. Procédé selon l'une quelconque des revendications 1 à 8, caractérisé en ce que l'imprégnation est réalisée en une seule fois par gélification in situ du sol induite par augmentation de température ou modification du pH.

10. Procédé selon l'une quelconque des revendications 1 à 9, caractérisé en ce que le renfort est constitué de fibres céramiques prises dans la famille carbone, carbure de silicium, alumine et alumine-silice, la fraction volumique de fibres dans le composite allant de 20 à 70 %.

11. Procédé selon l'une quelconque des revendication 1 à 10, caractérisé en ce que les fibres peuvent être unidirectionnelles et continues, ou sous forme de tissus, de mats non tissés ou de préformes multidirectionnelles.

12. Procédé selon l'une quelconque des revendications 1 à 11, caractérisé en ce que les fibres du renfort subissent avant imprégnation par le sol un traitement de surface destiné à affaiblir l'adhésion filament/matrice pour augmenter la ténacité du composite et/ou à protéger la fibre contre l'agressivité de la matrice.

13. Procédé selon la revendication 12 caractérisé en ce que le traitement de surface consiste en un dépôt de pyrocarbone.

14. Procédé selon l'une quelconque des revendications 1 à 13, caractérisé en ce que la pyrolyse du préimprégné est réalisée à une température allant de 200 à 600°C.

15. Procédé selon l'une quelconque des revendications 1 à 14, caractérisé en ce que la compression à chaud est réalisée à une température comprise entre 600 et 900°C sous une pression inférieure à 50 MPa.

16. Procédé selon l'une quelconque des revendications 2 à 15, caractérisé en ce que l'étape e) est complétée par un post-traitement de céramisation.

17. Procédé selon l'une quelconque des revendications 1 à 16, caractérisé en ce que l'étape e) comporte un chauffage sans pression jusqu'à la température de transition vitreuse de la matrice issue de la pyrolyse du pré-imprégné, une mise sous pression à la température de transition vitreuse de la matrice et une élévation sous pression de cette température jusqu'à une valeur se situant dans l'intervalle 800 - 1000°C.

18. Procédé selon la revendication 16 ou 17, caractérisé en ce que le traitement de céramisation est effectué après relâchement de la pression.

19. Matériau composite obtenu par un procédé selon l'une quelconque des revendications 1 à 8 ou 10 à 18, caractérisé en ce que sa porosité résiduelle est inférieure à 10 %, de préférence inférieure ou égale à 5 % et en ce que la matrice est exempte d'agent nucléant.

20. Matériau composite obtenu selon le procédé de la revendication 9, caractérisé en ce que la matrice est exempte d'agent nucléant.

## Claims

1. Method for manufacturing, by means of a sol-gel process and hot pressing, a composite material formed of a reinforcement of ceramic fibres, especially carbon, silicon carbide, alumina or alumino-silica fibres, and of a vitro-ceramic matrix or ceramic matrix based on SiO₂, Al₂O₃ and Li₂O, characterised in that it comprises the impregnation of the ceramic fibre reinforcement with a so] prepared from an aqueous suspension of silica and a solution of metal salts, and the hot pressing of the prepreg obtained, and in that the said sol contains a crystallisation retarding agent or a precursor of such an agent.

2. Method according to Claim 1, characterised in that it comprises the following steps:
a) impregnation of a fibrous reinforcement with a sol prepared from an aqueous suspension of silica, a solution of metal salts, and a solution containing a crystallisation retarding agent or a precursor of such an agent,
b) drying of the fibrous reinforcement thus impregnated,
c) repetition of the impregnation-drying steps until a prepreg is obtained having the desired fibre volume fraction,
d) pyrolysis of the prepreg for a length of time sufficient to remove the gases formed by chemical reaction,
e) hot pressing and cooling without pressure down to ambient temperature.

3. Method according to Claim 1 or 2, characterised in that the crystallisation retarding agent is boric anhydride.

4. Method according to Claim 3, characterised in that the boric anhydride is added to the sol in the form of a precursor consisting of boric acid or a borate, preferably ammonium tetraborate.

5. Method according to Claim 3 or 4, characterised in that the boric anhydride content of the sol ranges between 10 and 30% by weight with respect to the silica.

6. Method according to any one of Claims 2 to 5, characterised in that the metal salts are selected from aluminium and lithium salts, preferably their nitrates.

7. Method according to any one of Claims 1 to 6, characterised in that the overall concentration of the sol as oxide equivalent is increased by raising the temperature of the sol.

8. Method according to any one of Claims 1 to 7, characterised in that fillers are incorporated in the sol in the form of whiskers or particles reactive or not reactive with the matrix.

9. Method according to any one of Claims 1 to 8, characterised in that the impregnation is carried out in a single step by in situ gelling of the sol induced by increasing the temperature or modifying the pH.

10. Method according to any one of Claims 1 to 9, characterised in that the reinforcement is made up of ceramic fibres from the group of carbon, silicon carbide, alumina and alumino-silica fibres, the fibre volume fraction in the composite ranging from 20 to 70%.

11. Method according to any one of Claims 1 to 10, characterised in that the fibres may be unidirectional and continuous, or in the form of fabrics, non-woven mats or multidirectional preforms.

12. Method according to any one of Claims 1 to 11, characterised in that the fibres of the reinforcement, before impregnation with the sol, undergo a surface treatment intended to weaken the filament/matrix bond so as to increase the toughness of the composite and/or to protect the fibre from the aggressiveness of the matrix.

13. Method according to Claim 12, characterised in that the surface treatment consists of a pyrocarbon deposition.

14. Method according to any one of Claims 1 to 13, characterised in that the pyrolysis of the prepreg is carried out at a temperature ranging from 200 to 600°C.

15. Method according to any one of Claims 1 to 14, characterised in that the hot pressing is carried out at a temperature ranging from 600 to 900°C at a pressure of less than 50 MPa.

16. Method according to any one of Claims 2 to 15, characterised in that step e) is completed by a ceramisation post-treatment.

17. Method according to any one of Claims 1 to 16, characterised in that step e) comprises heating without pressure up to the glass transition temperature of the matrix obtained by pyrolysis of the prepreg, pressing at the glass transition temperature of the matrix, and raising under pressure from this temperature up to a value in the range of 800-1000°C.

18. Method according to Claim 16 or 17, characterised in that the ceramisation treatment is carried out after relaxation of the pressure.

19. Composite material obtained by a method according to any one of Claims 1 to 8 or 10 to 18, characterised in that its residual porosity is less than 10%, preferably less than or equal to 5%, and in that the matrix is free of nucleating agent.

20. Composite material obtained according to the method in Claim 9, characterised in that the matrix is free of nucleating agent.

## Patentansprüche

1. Sol-Gel- und Warmpreßverfahren zur Herstellung eines Verbundwerkstoffes, das aus einer Verstärkung aus Keramikfasern, insbesondere aus Kohlenstoff-, Siliziumkarbid-, Aluminiumoxid- oder Aluminiumoxid-/Siliziumdioxidfasern und einer glaskeramischen oder keramischen Matrix auf der Basis von SiO₂, Al₂O₃ und Li₂O besteht, dadurch gekennzeichnet, daß es die Imprägnierung der Keramikfaserverstärkung durch ein auf der Grundlage einer wässerigen Siliziumdioxid-Suspension und einer Lösung aus metallischen Salzen hergestelltes Sol sowie die Warmpressung des erhaltenen Prepregs umfaßt und daß das Sol ein Kristallisationsverzögerungsmittel oder ein Vorprodukt eines solchen Mittels enthält.

2. Verfahren nach Anspruch 1, dadurch gekennzeichnet, daß es die folgenden Schritte umfaßt:
a) Imprägnierung einer faserartigen Verstärkung durch ein Sol, das auf der Grundlage einer wässerigen Siliziumdioxid-Suspension, einer Lösung aus metallischen Salzen und einer Lösung hergestellt ist, die ein Kristallisationsverzögerungsmittel oder ein Vorprodukt eines solchen Mittels enthält,
b) Trocknung der auf diese Weise imprägnierten faserartigen Verstärkung,
c) Wiederholung der Imprägnierungs-Trocknungs-Schritte bis zur Erzielung eines Prepregs, das den gesuchten Faservolumenanteil besitzt,
d) Pyrolyse des Prepregs während einer Zeitspanne, die ausreichend lang ist, um die durch chemische Reaktion gebildeten Gase zu entfernen,
e) Warmpressung und drucklose Abkühlung bis auf Umgebungstemperatur.

3. Verfahren nach Anspruch 1 oder 2, dadurch gekennzeichnet, daß das Kristallisationsverzögerungsmittel Borsäureanhydrid ist.

4. Verfahren nach Anspruch 3, dadurch gekennzeichnet, daß Borsäureanhydrid zum Sol in Form eines Vorprodukts hinzugefügt wird, das aus Borsäure oder einem Borat, vorzugsweise Ammoniumtetraborat, besteht.

5. Verfahren nach Anspruch 3 oder 4, dadurch gekennzeichnet, daß der Borsäureanhydridgehalt des Sols zwischen 10 Gewichtsprozent und 30 Gewichtsprozent bezogen auf das Siliziumdioxid liegt.

6. Verfahren nach einem der Ansprüche 2 bis 5, dadurch gekennzeichnet, daß die metallischen Salze unter den Aluminium- und Lithiumsalzen, vorzugsweise ihren Nitraten, ausgewählt werden.

7. Verfahren nach einem der Ansprüche 1 bis 6, dadurch gekennzeichnet, daß die Gesamtkonzentration des Sols an Oxidäquivalent durch Erhöhung der Temperatur des Sols vergrößert wird.

8. Verfahren nach einem der Ansprüche 1 bis 7, dadurch gekennzeichnet, daß Füllstoffe in Form von Whiskern oder von mit der Matrix reagierenden oder nicht reagierenden Partikeln in das Sol eingebracht werden.

9. Verfahren nach einem der Ansprüche 1 bis 8, dadurch gekennzeichnet, daß die Imprägnierung auf ein einziges Mal durch In-Situ-Gelbildung des Sols, die durch Temperaturerhöhung oder Modifizierung des pH-Werts eingeleitet wird, ausgeführt wird.

10. Verfahren nach einem der Ansprüche 1 bis 9, dadurch gekennzeichnet, daß die Verstärkung aus keramischen Fasern besteht, die der Gruppe Kohlenstoff, Siliziumkarbid, Aluminiumoxid und Aluminiumoxid-Siliziumdioxid entnommen sind, wobei der Faservolumenanteil im Verbund im Intervall von 20 % bis 70 % liegt.

11. Verfahren nach einem der Ansprüche 1 bis 10, dadurch gekennzeichnet, daß die Fasern unidirektional und kontinuierlich verlaufen oder die Form von Geweben, von nicht gewebten Matten oder von multidirektional verlaufenden Vorformlingen haben können.

12. Verfahren nach einem der Ansprüche 1 bis 11, dadurch gekennzeichnet, daß die Fasern der Verstärkung vor der Imprägnierung durch das Sol einer Oberflächenbehandlung unterzogen werden, die dazu dient, die Filament/Matrix-Adhäsion abzuschwächen, um die Festigkeit des Verbunds zu erhöhen und/oder die Faser vor der Aggressivität der Matrix zu schützen.

13. Verfahren nach Anspruch 12, dadurch gekennzeichnet, daß die Oberflächenbehandlung aus der Abscheidung von Pyrokohlenstoff besteht.

14. Verfahren nach einem der Ansprüche 1 bis 13, dadurch gekennzeichnet, daß die Pyrolyse des Prepregs bei einer Temperatur von 200 °C bis 600 °C durchgeführt wird.

15. Verfahren nach einem der Ansprüche 1 bis 14, dadurch gekennzeichnet, daß die Warmpressung bei einer Temperatur zwischen 660 °C und 900 °C unter einem Druck kleiner als 50 MPa durchgeführt wird.

16. Verfahren nach einem der Ansprüche 2 bis 15, dadurch gekennzeichnet, daß der Schritt e) durch eine Nachbehandlung zur Keramikbildung ergänzt wird.

17. Verfahren nach einem der Ansprüche 1 bis 16, dadurch gekennzeichnet, daß der Schritt e) eine Erwärmung ohne Druck bis zur Glasübergangstemperatur der nach der Pyrolyse des Prepregs vorliegenden Matrix, eine Druckbeaufschlagung bei der Glasübergangstemperatur der Matrix und eine Erhöhung dieser Temperatur ohne Druck bis zu einem Wert, der im Intervall von 800 °C bis 1000 °C liegt, beinhaltet.

18. Verfahren nach Anspruch 16 oder 17, dadurch gekennzeichnet, daß die Behandlung zur Keramikbildung nach einem Nachlassen des Drucks ausgeführt wird.

19. Verbundwerkstoff, der durch ein Verfahren nach einem der Ansprüche 1 bis 8 und 10 bis 18 erhalten wird, dadurch gekennzeichnet, daß seine Restporosität kleiner als 10 %, bevorzugt kleiner oder gleich 5 %, ist und daß die Matrix kein Nukleationsmittel enthält.

20. Verbundwerkstoff, der durch das Verfahren nach Anspruch 9 erhalten wird, dadurch gekennzeichnet, daß die Matrix kein Nukleationsmittel enthält.
